# EUROPÄISCHE PATENTSCHRIFT

(11) **EP 2 997 867 B1**
(45) Veröffentlichungstag und Bekanntmachung des Hinweises auf die Patenterteilung: **23.08.2017**
(21) Anmeldenummer: 15184852.0
(22) Anmeldetag: 11.09.2015
(51) Int. Cl.: A47J 43/07, A47J 43/046, A47J 36/32

(54) **VERFAHREN ZUR FREIGABE EINER VERRIEGELUNG EINES EIN ZUBEREITUNGSGEFÄSS VERSCHLIESSENDEN DECKELS SOWIE KÜCHENMASCHINE MIT EINEM ZUBEREITUNGSGERÄT**
METHOD FOR RELEASING A LOCKING MECHANISM OF A COVER CLOSING A PREPARATION VESSEL, AND KITCHEN APPLIANCE WITH A PREPARATION DEVICE
PROCÉDÉ DE DÉVERROUILLAGE D'UN COUVERCLE FERMANT UN RÉCIPIENT DE PREPARATION ET ROBOT MÉNAGER DOTÉ D'UN APPAREIL DE PRÉPARATION

(30) Priorität: 19.09.2014 DE 102014113571
(43) Veröffentlichungstag der Anmeldung: 23.03.2016
(73) Patentinhaber: Vorwerk & Co. Interholding GmbH, 42275 Wuppertal (DE)
(72) Erfinder: Kraut-Reinkober, Stefan, 51375 Leverkusen (DE); Lang, Torsten, 42657 Solingen (DE)
(74) Vertreter: Müller, Enno

(56) Entgegenhaltungen:
- WO-A1-2014/026866
- DE-A1-102010 017 719

## Beschreibung

Die Erfindung betrifft zunächst ein Verfahren zur Freigabe einer Verriegelung eines ein Zubereitungsgefäß, insbesondere ein mit einem Rührwerk versehenes und/oder aufheizbares Zubereitungsgefäß einer Kücherunaschine, verschließenden Deckels, insbesondere nach einem Abschalten des Rührwerks und/ oder einer Heizeinrichtung, wobei ein für eine Zubereitung einer Speise verwendeter Zustandswert gemessen und gespeichert wird, wobei der innerhalb eines bestimmten Zeitraumes gemessene Zustandswert mit gespeicherten Referenzdaten verglichen wird und wobei die Freigabe der Verriegelung nach dem Ablauf eines in Abhängigkeit von dem Vergleichsergebnis festgelegten Verzögerungszeitraums erfolgt.

Verfahren der in Rede stehenden Art sind bekannt. Diese finden bevorzugt Verwendung bei der Zubereitung einer Speise mittels einer Küchenmaschine, beispielsweise eines kombinierten Koch-Mix-Gerätes. Derartige Zubereitungsgefäße bzw. Küchenmaschinen verfügen bevorzugt über eine Heizeinrichtung zur Aufheizung der in dem Zubereitungsgefäß enthaltenen Speise, und/ oder über ein in dem Zubereitungsgefäß anordenbares Rührwerk, welches bevorzugt elektrisch angetrieben ist und bevorzugt zur Durchmischung der in dem Zubereitungsgefäß befindlichen Speise dient. Insbesondere sind auch solche Zubereitungsgefäße oder Küchenmaschinen bekannt, welche sowohl über eine Heizeinrichtung als auch über ein Rührwerk verfügen, wobei es weiterhin bekannt ist, die Heizeinrichtung beispielsweise in oder an einer Wandung des Zubereitungsgefäßes vorzusehen, insbesondere in Form einer bodenseitig vorgesehenen Widerstandsheizung.

Die Druckschrift EP 2 529 650 B1 beschreibt ein Verfahren zur Freigabe der Verriegelung eines Deckels eines solchen Zubereitungsgefäßes, wobei während der Zubereitung einer Speise innerhalb des Zubereitungsgefäßes Zustandswerte gemessen und gespeichert werden. Diese Zustandswerte betreffen beispielsweise eine Drehzahl des Rührwerks und/ oder eine Temperatur der Heizeinrichtung oder der in dem Zubereitungsgefäß 1 enthaltenen Speise. Da insbesondere bei einem Verrühren der in dem Zubereitungsgefäß befindlichen Speise zumindest ein Teil der Speise aufgrund einer Trombenbildung von innen gegen den Deckel 2 des Zubereitungsgefäßes 1 drücken kann, ist es bekannt, eine Freigabe des Deckels erst nach Ablauf einer Abklingdauer der Trombe vorzunehmen. Zu diesem Zweck wird die Freigabe des Deckels in Abhängigkeit von einer Auswertung der gespeicherten Zustandswerte eines vorgegebenen Zeitraumes vorgenommen. Die gespeicherten Zustandswerte werden dabei mit gespeicherten Referenzdaten verglichen, welche übliche Abklingdauern für bestimmte Zustandswerte angeben.

Aus der WO2014/02866 ist ein Küchengerät mit einem Rührgefäß und einem Rührwerk bekannt, bei welchem im Hinblick auf eine Entriegelung eines Deckels der das Rührwerk antreibende Elektromotor daraufhin überwacht wird, ob er läuft oder still steht.

Ausgehend von diesem Stand der Technik ist es Aufgabe der Erfindung, ein Verfahren der in Rede stehenden Art weiter zu verbessern. Dies insbesondere hinsichtlich des Bedienungskomforts und der sicheren Anwendung einer entsprechenden Küchenmaschine durch einen Nutzer.

Zur Lösung der vorgenannten Aufgabe schlägt die Erfindung ein Verfahren zur Freigabe der Verrieglung eines ein Zubereitungsgefäß verschließenden Deckels vor, bei welchem der Zustandswert innerhalb des Rührgefäßes gemessen wird, der gemessene Zustandswert eine Masse und/oder eine an einer Wandung des Zubereitungsgefäßes oder des Deckels wirkende Kraft und/oder einen Druck und/ oder eine Strömungsgeschwindigkeit der in dem Zubereitungsgefäß enthaltenen Speise angibt.

Das erfindungsgemäße Verfahren nutzt zur Freigabe der Verriegelung des Deckels somit alternativ oder ergänzend zu den im Stand der Technik verwendeten Zustandswerten die Masse, die Kraft, den Druck und/ oder die Strömungsgeschwindigkeit der in dem Zubereitungsgefäß enthaltenen Speise. Die Kraft (bzw. der Druck) ist dabei diejenige Kraft bzw. derjenige Druck, welche (welcher) an einer Wandung des Zubereitungsgefäßes oder des Deckels angreift.

Die Freigabe kann somit anhand einer Vielzahl grundsätzlich unterschiedlicher Zustandswerte erfolgen, wodurch sich insgesamt die Genauigkeit des richtigen Zeitpunkts für eine gefahrlose Freigabe der Verriegelung des Deckels verbessern lässt. Dabei liegt der Erfindung die Erkenntnis zugrunde, dass die Ausbildung und insbesondere die Höhe einer Trombe innerhalb des Zubereitungsgefäßes nicht alleine von der Drehzahl des Rührwerks und der Temperatur der in dem Zubereitungsgefäß enthaltenen Speisen abhängt, sondern vielmehr auch von weiteren Zustandswerten wie Masse, Kraft/Druck und Strömungsgeschwindigkeit. Beispielsweise wird eine in dem Zubereitungsgefäß enthaltene Speise mit steigender Masse eher dazu neigen, während des Betriebs der Küchenmaschine gegen den Deckel zu drücken. Die gegen die Innenwandung des Zubereitungsgefäßes wirkende Kraft oder die in dem Zubereitungsgefäß auftretende Strömungsgeschwindigkeit lassen darauf schließen, dass die Speise beispielsweise nach einem Rührvorgang innerhalb des Zubereitungsgefäßes noch in Bewegung ist und sich je nach dem Betrag des jeweiligen Zustandswertes noch im Bereich des Deckels befindet, so dass eine Freigabe der Verriegelung noch nicht gefahrlos erfolgen kann. Um die gemessenen Zustandswerte Masse, Kraft/Druck und/oder Strömungsgeschwindigkeit bzw. auch die bereits im Stand der Technik berücksichtigte Drehzahl des Rührwerks und/oder Temperatur der Speisen bzw. der Heizeinrichtung bewerten zu können, sieht die Erfindung vor, dass die aktuell gemessenen Zustandswerte mit gespeicherten Referenzdaten verglichen werden. Die aktuellen Zustandswerte können dabei über einen bestimmten Zeitraum gemittelt werden, beispielsweise über eine halbe Sekunde oder auch mehrere Sekunden. Dieser gemittelte Wert wird dann mit Referenzdaten verglichen, wobei das Vergleichsergebnis eine Aussage darüber zulässt, ob eine Freigabe der Verriegelung des Deckels erfolgen kann, d.h. ob das Zubereitungsgefäß geöffnet werden kann ohne dass Speiseanteile aus dem Zubereitungsgefäß heraus befördert, insbesondere aufgrund einer Trombenbildung heraus geschleudert, werden. Die Referenzdaten betreffen dabei vorteilhaft solche Zustandswerte, welche empirisch unmittelbar vor einer gefahrlosen Freigabe des Deckels gemessen wurden. Insofern geben die Referenzdaten Zustandswerte an, welche innerhalb eines zulässigen Wertebereiches liegen. Sofern die aktuell gemessenen Zustandswerte mit eine gefahrlose Freigabe ermöglichenden Referenzdaten übereinstimmen, kann die Freigabe des Deckels veranlasst werden.

Die gemessenen Zustandswerte lassen Rückschlüsse auf die Trombenausbildung zu und entsprechend auch auf die Abklingzeit, innerhalb welcher sich die Trombe insbesondere nach einem Abschalten des Rührwerks, wieder zurückbildet. Erst nach Ablauf einer sich aus den Referenzdaten ergebenden Abklingzeit, d.h. Nachlaufzeit bzw. Absenkzeit der Trombe, wird der Deckel freigegeben. Anhand des Vergleichsergebnisses aus den aktuell gemessenen Zustandswerten und den Referenzdaten wird ggf. eine Abklingzeit als Wartezeit bis zur Freigabe der Verriegelung vorgegeben, so dass die Freigabe erst nach Ablauf der Abklingzeit vorgenommen werden kann. Ergibt das Vergleichsergebnis, dass sich keine in Richtung auf die Unterseite des Deckels erstreckende Trombe in dem Zubereitungsgefäß befindet, die beim Abnehmen des Deckels zu einem Herausspritzen von Speisen führen könnte, wird die Freigabe bevorzugt unmittelbar mit Fertigstellung des Vergleichsergebnisses vorgenommen. Bevorzugt ist dieser Zeitpunkt unmittelbar nach einem Abschaltzeitpunkt des Rührwerks und/oder nach einem Abschaltzeitpunkt der Heizeinrichtung.

Die gespeicherten Referenzdaten zum Vergleich mit den gemessenen Zustandswerten können in Laborversuchen ermittelte Zustandswerte sein. Ebenso können die Referenzdaten auch mit Hilfe von Algorithmen berechnete Abklingzeiten aufweisen.

In jedem Fall kann eine Tabelle hinterlegt sein, auf welche eine Auswerte- und Steuereinrichtung der Küchenmaschine zugreifen kann, in welcher zu unterschiedlichen Zustandswerten unterschiedliche Abklingzeiten für die Verzögerung der Deckelfreigabe hinterlegt sind. Der aktuell gemessene Zustandswert wird dabei mit den Referenzdaten der Tabelle verglichen, wobei vorteilhaft der nächstliegende höhere Wert zur Bestimmung der Abklingzeit herangezogen wird.

Es wird auch vorgeschlagen, dass die gemessenen Zustandswerte (zusätzlich zu den vorgenannten Zustandswerten) eine Drehzahl des Rührwerks und/ oder eine Temperatur einer dem Zubereitungsgefäß zugeordneten Heizeinrichtung und/oder eine Temperatur der Speise und/ oder ein Volumen der Speise und/ oder eine Konsistenz der Speise angeben. Mit steigender Anzahl der für die Auswertung verwendeten Zustandswerte steigt auch die Anwendungssicherheit der Küchenmaschine.

Weiter schlägt die Erfindung vor, im Falle, dass in Bezug auf einen Zubereitungszeitpunkt, zu welchem noch keine oder für einen Vergleich nicht ausreichend viele Zustandswerte gespeichert sind, eine Freigabe des Deckels erst nach Ablauf eines vordefinierten Sicherungszeitraums nach einem Abschalten eines Rührwerks und/ oder einer Heizeinrichtung erfolgt.

Diese Verfahrensgestaltung bietet sich dort an, wo eine Küchenmaschine mit einer entsprechenden Freigabeeinrichtung zur Freigabe eines Deckels eines Zubereitungsgefäßes zum allerersten Mal in Betrieb genommen wird. In diesem Fall sind innerhalb des Speichers noch keine oder zu wenige Zustandswerte gespeichert, welche mit den Referenzdaten verglichen werden könnten. In diesem Fall wird aus Sicherheitsgründen eine vordefinierte Verzögerungszeitdauer, insbesondere eine Maximalzeitdauer, bis zur Freigabe des Deckels bemessen. Sofern also festgestellt wird, dass die gemessenen Zustandswerte für einen Vergleich mit den Referenzdaten nicht ausreichen, berechnet sich die Wartezeit von dem Zeitpunkt der Abschaltung des Rührvorgangs und/oder des Heizvorgangs nach der Dauer des für diesen Fall vorgesehenen Sicherungszeitraums. Insofern kann das Verfahren zur Freigabe des Deckels unter Beachtung aller Sicherheitsvorkehrungen durchgeführt werden.

Es wird vorgeschlagen, dass der vordefinierte Sicherungszeitraum mehrere Sekunden, bevorzugt mehr als 5 Sekunden, besonders bevorzugt mehr als 10 Sekunden, beinhaltet. Der Sicherungszeitraum ist dabei so ausgelegt, dass eine größtmögliche Abklingzeit einer Trombe berücksichtigt wird. Vorteilhaft wird dabei für die jeweiligen Zustandswerte, insbesondere Masse, Volumen, Kraft, Druck, Strömungsgeschwindigkeit, Drehzahl, Temperatur, jeweils derjenige Wert zugrunde gelegt, welcher zu einer größtmöglichen Abklingzeit der Trombe führt. Insofern kann das Verfahren zur Freigabe des Deckels mit maximaler Sicherheit durchgeführt werden.

Des Weiteren wird vorgeschlagen dass eine sich während der Zubereitung einer Speise innerhalb des Zubereitungsgefäßes ausbildende Trombe aktiv mittels des in dem Zubereitungsgefäß angeordneten Rührwerks gebremst wird. Gemäß dieser Ausgestaltung wird das Abklingen der Trombe nach der Beendigung eines Rührvorgangs und/ oder eines Heizvorgangs aktiv unterstützt. Dadurch kann die Abklingzeit der Trombe und damit auch der Verzögerungszeitraum bis zu einer möglichen Freigabe erheblich reduziert werden. Die Abklingzeit kann dadurch beispielsweise bis zu 50 Prozent verringert werden. Erfindungsgemäß wird das Rührwerk verwendet, um die innerhalb des Zubereitungsgefäßes rotierende Trombe abzubremsen.

Insbesondere ist dabei vorgesehen, dass die Trombe mittels einer gegen die Bewegungsrichtung der Trombe gerichteten Bewegung des Rührwerks gebremst wird, insbesondere gegen eine zur Ausbildung der Trombe benutzte Rotationsrichtung des Rührwerks. Somit führt die Rotation des Rührwerks in eine Vorwärtsrichtung zur Ausbildung der Trombe, während eine entgegengesetzte Bewegung in Rückwärtsrichtung zu einem Abbremsen und somit Abklingen der Trombe führt. Im Gegensatz zu einem bloßen Stillstand des Rührwerks kann durch die Bewegung des Rührwerks in Gegenrichtung ein aktives Abbremsen erfolgen.

Schließlich wird mit der Erfindung ebenfalls eine Kombination der einzelnen vorbeschriebenen Verfahrensmerkmale vorgeschlagen. Beispielsweise ist auch ein Verfahren zur Freigabe einer Verriegelung vorgeschlagen, welches eine aktive Bremsung der Trombe vorsieht, die Berücksichtigung eines vordefinierten Sicherungszeitraums bis zur Freigabe der Verriegelung sowie die Auswertung unterschiedlicher Zustandswerte wie Masse, Volumen, Kraft/Druck, Strömungsgeschwindigkeit, Drehzahl und/ oder Temperatur.

Neben einem Verfahren zur Freigabe einer Verriegelung schlägt die Erfindung ebenfalls eine Küchenmaschine mit einem Zubereitungsgefäß und einem dem Zubereitungsgefäß zugeordneten Rührwerk und/oder einer dem Zubereitungsgefäß zugeordneten Heizeinrichtung vor, wobei die Küchenmaschine eine Messeinrichtung zur Messung eines für eine Zubereitung einer Speise innerhalb des Zubereitungsgefäßes gegebenen Zustandswertes aufweist, einen Speicher zur Speicherung der gemessenen Zustandswerte, eine Auswerteeinrichtung zum Vergleichen eines innerhalb eines bestimmten Zeitraumes gemessenen Zustandswertes mit gespeicherten Referenzdaten und eine Verriegelungseinrichtung, welche ausgebildet ist, die Freigabe einer Verriegelung eines das Zubereitungsgefäß verschließenden Deckels in Abhängigkeit von dem Vergleichsergebnis der Auswerteeinrichtung zu bewirken, wobei die Messeinrichtung eine dem Zubereitungsgefäß zugeordnete Wägeeinrichtung und/oder einen dem Zubereitungsgefäß zugeordneten Kraftsensor und/ oder Drucksensor und/oder Strömungssensor aufweist.

Darüber hinaus wird ebenfalls vorgeschlagen, dass die Messeinrichtung der Küchenmaschine einen dem Rührwerk zugeordneten Drehzahlmesser und/oder einen dem Zubereitungsgefäß und/ oder der Heizeinrichtung zugeordneten Temperatursensor und/ oder einen Füllstandssensor aufweist.

Die erfindungsgemäßen Vorteile der Küchenmaschine ergeben sich dabei wie zuvor in Bezug auf das erfindungsgemäße Verfahren dargestellt.

Im Folgenden wird die Erfindung anhand eines Ausführungsbeispiels näher erläutert. Es zeigen:
- Figur 1:: in Seitenansicht eine Küchenmaschine mit einem Zubereitungsgefäß und einem an dem Zubereitungsgefäß angeordneten Deckel,
- Figur 2:: eine Frontalansicht der Küchenmaschine gemäß Figur 1,

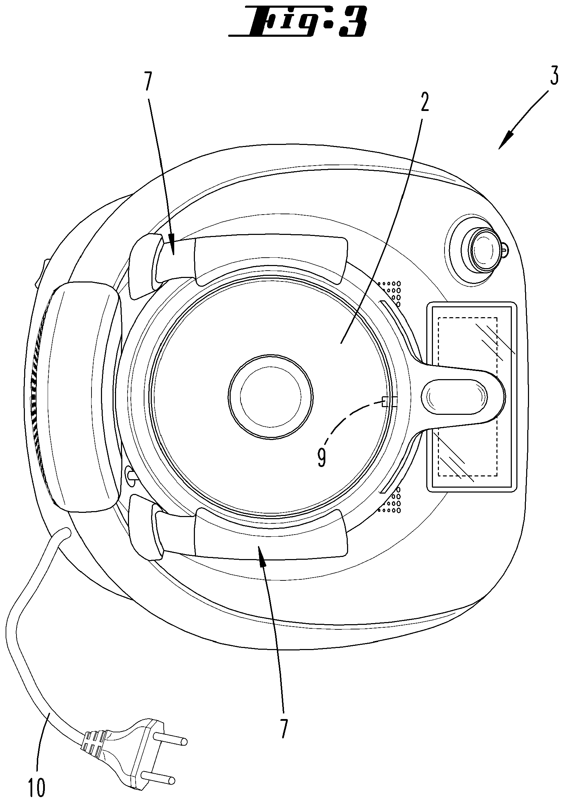

- Figur 3:: eine Draufsicht der Küchenmaschine gemäß den Figuren 1 und 2,
- Figur 4:: ein Zeit-Drehzahl-Diagramm gemäß einer ersten Ausführungsform der Erfindung,
- Figur 5:: ein Zeit-Drehzahl-Diagramm gemäß einer zweiten Ausführungsform der Erfindung

Dargestellt und beschrieben ist eine beispielhafte Küchenmaschine 3. Diese weist ein Zubereitungsgefäß 1 mit einem Deckel 2 auf. In dem Zubereitungsgefäß 1 ist ein Rührwerk 4 angeordnet. Des Weiteren verfügt die Küchenmaschine 3 über ein Bedienfeld mit einer Mehrzahl von Reglern und/oder Tastern sowie ein Display zum Anzeigen der insbesondere über die Regler und/ oder Taster einstellbaren Zustandswerte.

Das Zubereitungsgefäß 1 ist insbesondere im Fußbereich der Küchenmaschine 3 bevorzugt formschlüssig aufnehmbar und halterbar. Das Zubereitungsgefäß 1 kann bevorzugt im Wesentlichen rotationssymmetrisch ausgebildet sein. Das Rührwerk 4 ist mit einem in der Küchenmaschine 3 angeordneten, weiter bevorzugt elektromotorisch betriebenen Rührwerkantrieb verbunden. Die Elektroversorgung des Rührwerkantriebs sowie ggf. zusätzlich oder alternativ einer im Bodenbereich des Zubereitungsgefäßes 1 angeordneten Heizeinrichtung 6 und darüber hinaus auch der elektrischen Steuerung der gesamten Küchenmaschine 3 ist über ein Netzanschlusskabel 10 erreicht.

Das Zubereitungsgefäß 1 ist im Betrieb des Rührwerks 4 und/ oder der Heizeinrichtung 6 durch den Deckel 2 verschlossen. Das Zubereitungsgefäß 1 und der Deckel 2 sind mittels einer Verriegelungseinrichtung 7 zueinander verriegelbar bzw. freigebbar. Die Verriegelungseinrichtung 7 weist im gezeigten Ausführungsbeispiel zwei Verriegelungswalzen auf. Diese Verriegelungswalzen sind bevorzugt lang gestreckt, mit einer zentralen, in Längserstreckung ausgerichteten Achse ausgebildet, welche zugleich eine Drehachse ist. Die Verriegelungswalzen der Verriegelungseinrichtung 7 sind derart angeordnet, dass diese mit Bezug auf eine Draufsicht einen Randbereich des Zubereitungsgefäßes 1 sowie in Zuordnungsstellung einen Randbereich des Deckels 2 sekantenartig schneiden. Ein Ende der Verriegelungswalzen ist bevorzugt mit einem in der Küchenmaschine 3 angeordneten Elektromotor verbunden. Zur Verriegelung bzw. Freigabe des Deckels 2 mit dem Zubereitungsgefäß 1 ist die Verriegelungswalze um die Achse drehbar. Bezüglich weiterer Merkmale hinsichtlich der Verriegelung des Deckels 2, insbesondere hinsichtlich der Ausgestaltung und Wirkungsweise der Verriegelungswalzen, wird auf die eingangs genannte Patentschrift EP 2 529 650 B1 verwiesen.

Die elektromotorische Verriegelung zwischen dem Zubereitungsgefäß 1 und dem Deckel 2 kann bevorzugt selbsttätig durch die Küchenmaschine 3 ausgelöst werden, weiter bevorzugt in dem Fall, dass ein Nutzer das Rührwerk 4 oder die Heizeinrichtung 6 in Betrieb nimmt.

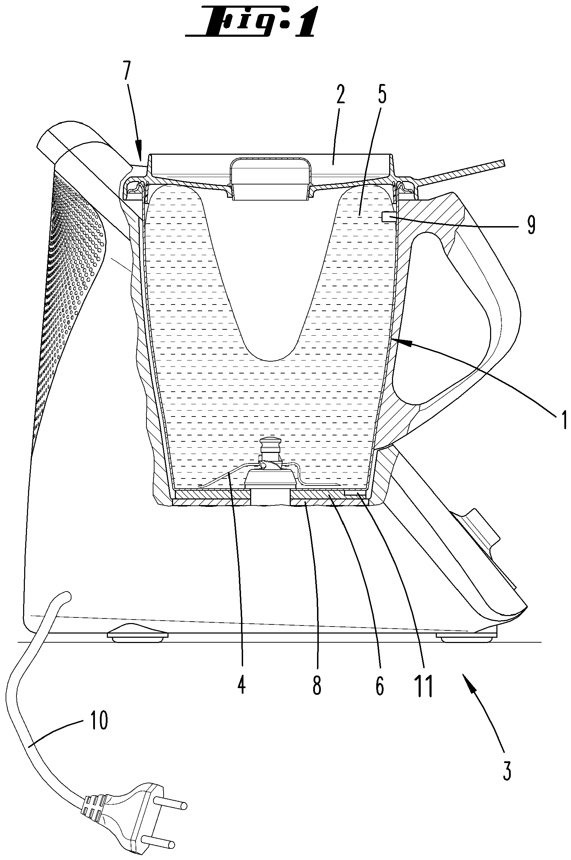

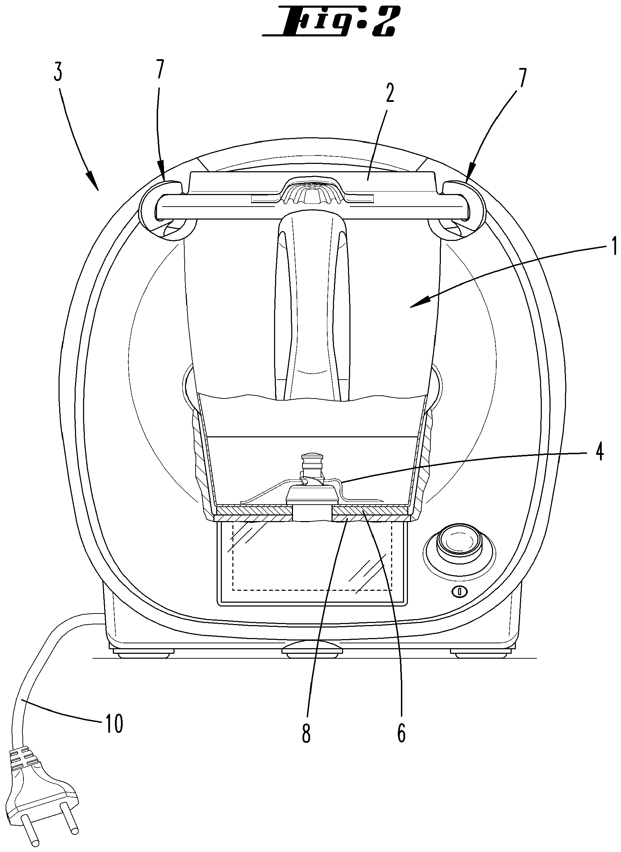

Des Weiteren verfügt die Küchenmaschine 3 über eine Wägeeinrichtung 8 sowie einen Kraftsensor 9. In dem in den Figuren 1 und 2 gezeigten Ausführungsbeispiel ist während des Betriebs des Rührwerks 4 bzw. der Heizeinrichtung 6 eine Trombe 5 innerhalb des Zubereitungsgefäßes 1 ausgebildet.

Die Erfindung funktioniert so, dass die zuzubereitenden Lebensmittel (d.h. die Speise) in das Zubereitungsgefäß 1 eingebracht werden. Das Zubereitungsgefäß 1 wird mit dem Deckel 2 verschlossen und in die Küchenmaschine 3 eingesetzt. Daraufhin startet der Nutzer der Küchenmaschine 3 das Rührwerk 4 und/oder die Heizeinrichtung 6. Dabei erfolgt automatisch eine Verriegelung durch die Verriegelungseinrichtung 7, nämlich hier der beiden Verriegelungswalzen.

Während des Betriebs der Küchenmaschine 3 bleibt die Verriegelung des Deckels 2 auf dem Zubereitungsgefäß 1 aktiviert. Erst mit dem Ausschalten sowohl des Rührwerks 4 als auch weiter bevorzugt der Heizeinrichtung 6 erfolgt abhängig von aktuellen Zustandswerten - selbsttätig ausgelöst durch die Küchenmaschine 3 - die Freigabe der Verriegelungseinrichtung 7.

Während der Zubereitung einer Speise in dem Zubereitungsgefäß 1 bildet sich infolge der Dreheinwirkung des Rührwerks 4 und/oder der Temperatureinwirkung der Heizeinrichtung 6 eine Trombe 5 aus. Die Trombe 5 drückt mit einer entsprechenden Kraft gegen die Innenwandung des Zubereitungsgefäßes 1 und/oder des Deckels 2. Die die Zubereitung charakterisierenden Zustandswerte sind neben der Kraft (dem Druck) insbesondere die Drehzahl des Rührwerks 4, die Temperatur der Heizeinrichtung 6, die Temperatur der in dem Zubereitungsgefäß 1 befindlichen Speise, die Masse oder das Volumen der Speise oder die in dem Zubereitungsgefäß 1 gegebene Strömungsgeschwindigkeit. Darüber hinaus können die Zustandswerte auch die Füllhöhe und/ oder die Konsistenz der Speise beinhalten. Die Trombe 5 bildet sich insbesondere abhängig von den vorbezeichneten Zustandswerten nach einem Abschalten des Rührwerks 4 und/oder der Heizeinrichtung 6 langsam zurück, bricht entsprechend nicht schlagartig in sich zusammen. Während dieser Tromben-Abklingzeit bleibt die Verriegelung des Deckels 2 bestehen. Erst nach vollständigem Abbau der Trombe 5 oder alternativ nach dem Abbau der Trombe 5 bis zu einem vordefinierten Höhenniveau, welches nicht mehr die Gefahr eines Herausspritzens von Speiseanteilen nach Abnahme des Deckels 2 zur Folge hat, erfolgt eine Freigabe der Verriegelung des Deckels 2, insbesondere eine Drehverlagerung der Verriegelungswalzen der Verriegelungseinrichtung 7.

Um einen geeigneten Verzögerungszeitraum zu ermitteln, welcher im Wesentlichen der Abklingzeit der Trombe 5 nach der Beendigung eines Rührvorgangs und/oder eines Heizvorgangs entspricht, werden die aktuellen gemessenen und abgespeicherten Zustandswerte mit gespeicherten Referenzdaten verglichen. Die Zustandswerte können Messwerte einer Drehzahl, einer Temperatur, einer Masse, eines Volumens, eines Druckes, einer Kraft, einer Strömungsgeschwindigkeit, einer Füllhöhe oder einer Konsistenz der in dem Zubereitungsgefäß 1 enthaltenen Speise sein. Die gemessenen Zustandswerte werden für eine Auswertung an eine Auswerteeinrichtung der Küchenmaschine 3 übermittelt. Die Auswerteeinrichtung vergleicht die gemessenen Zustandswerte anschließend mit den gespeicherten Referenzdaten. Die Referenzdaten sind vorteilhaft in einer Tabelle hinterlegt, wobei zu unterschiedlichen Zustandswerten, d.h. Drehzahl, Temperatur usw. unterschiedliche Verzögerungszeiträume hinterlegt sind. Die Auswerteeinrichtung vergleicht die gemessenen Zustandswerte mit den in der Tabelle hinterlegten Referenzdaten und wählt vorteilhaft denjenigen Verzögerungszeitraum, welcher dem identischen bzw. nächsthöheren Zustandswert entspricht. Somit ist sichergestellt, dass mit einer Freigabe der Verriegelung des Deckels 2 keine Speiseanteile aufgrund ggf. noch wirkender Zentrifugalkräfte oder Temperaturen herausspitzen können. Durch den Vergleich mit Referenzdaten wird eine unnötige Wartezeit für den Nutzer der Küchenmaschine 3 über den erforderlichen Verzögerungszeitraum zum Abklingen der Trombe hinaus vermieden.

Sofern die Küchenmaschine 3 ein erstes Mal in Betrieb genommen wird und somit noch keine oder noch nicht genug gemessene Zustandswerte in dem Speicher der Küchenmaschine 3 zur Verfügung stehen, erfolgt eine Freigabe vorteilhaft erst nach dem Ablauf eines vordefinierten Sicherungszeitraumes ab dem Zeitpunkt des Abschaltens des Rührwerkes 4 und/ oder der Heizeinrichtung. Dieser Sicherungszeitraum kann mehrere Sekunden betragen, vorteilhaft mehr als 5 oder gar mehr als 10 Sekunden.

Um die Abklingzeit der Trombe 5 und somit auch den Verzögerungszeitraum zu verkürzen, wird das Rührwerk 4 nach dem Abschalten des Rührwerkes 4 oder der Heizeinrichtung in die entgegengesetzte Richtung rotiert, so dass die in dem Zubereitungsgefäß 1 ausgebildete Trombe 5 aktiv gebremst wird. Dadurch wird der Verzögerungszeitraum bis zu einer möglichen Freigabe der Verriegelung des Deckels 2 erheblich reduziert.

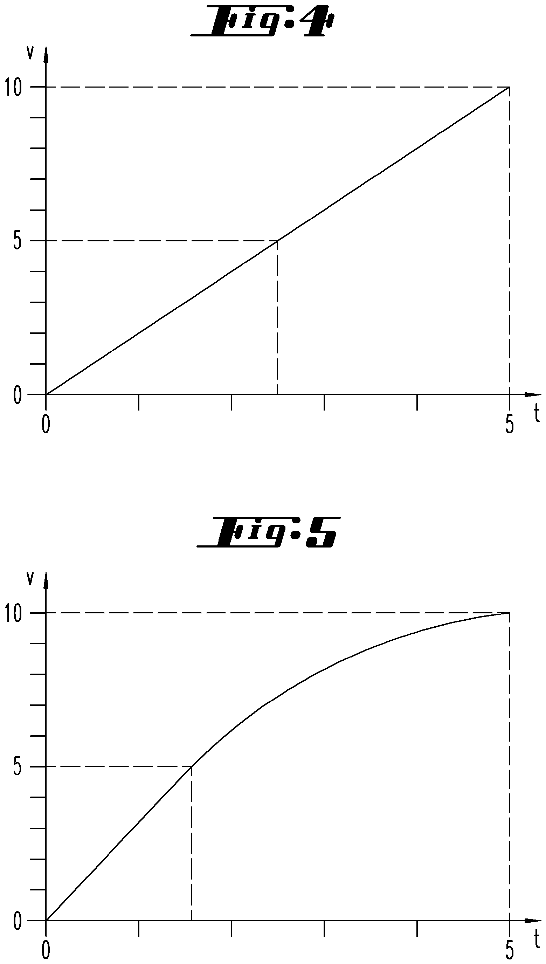

In den Figuren 4 und 5 sind exemplarisch zwei unterschiedliche Zeit-Strömungsgeschwindigkeit-Diagramme dargestellt, welche unterschiedliche Abklingverhalten einer Trombe 5 darstellen. Den Diagrammen ist die jeweilige Abklingzeit t bei unterschiedlichen Strömungsgeschwindigkeiten v der Trombe zu entnehmen. Die Abklingzeit t hängt neben der Strömungsgeschwindigkeit v selbstverständlich von weiteren Parametern ab, wie beispielsweise den Dimensionen des Zubereitungsgefäßes oder den aktuellen weiteren Zustandswerten, beispielsweise der Masse, der Temperatur oder dem Volumen einer in dem Zubereitungsgefäß 1 enthaltenen Speise. Die gezeigten Diagramme sind jeweils für diesbezüglich konstante Parameter dargestellt, sofern diese nicht selbst von der Strömungsgeschwindigkeit v abhängig sind. Lediglich die Strömungsgeschwindigkeit v wird variiert. Gemäß dem in Figur 4 dargestellten Abklingverhalten der Trombe 5 steigt die Abklingzeit t linear mit der Strömungsgeschwindigkeit v an. Demgegenüber zeigt Figur 5 eine Konstellation, in welcher die Abklingzeit 5 mit steigender Strömungsgeschwindigkeit v nicht linear ansteigt, sondern vielmehr überproportional. Sofern - wie in der Figur - beispielsweise die Strömungsgeschwindigkeit v verdoppelt wird, steigt die Abklingzeit auf mehr als das Doppelte, nämlich auf mehr als das Dreifache, an (vergleiche v = 5, t = 1,5 / v = 10, t = 5).

Um die gewünschten Zustandswerte des aktuellen Zubereitungsvorgangs zu messen, weist die Küchenmaschine 3 in dem gezeigten Ausführungsbeispiel eine Wägeeinrichtung 8, einen der Heizeinrichtung 6 zugeordneten Temperatursensor 11 sowie einen Kraftsensor 9 auf. Die Wägeeinrichtung 8 ist im Bereich einer Gefäßaufnahme der Küchenmaschine 3 angeordnet, so dass das Zubereitungsgefäß 1 in dem an der Küchenmaschine 3 angeordneten Zustand auf der Wägeeinrichtung 8 steht und die Masse der in dem Zubereitungsgefäß 1 enthaltenen Speise gemessen werden kann. Der Kraftsensor 9 ist an einer Innenwandung des Zubereitungsgefäßes 1 in einem deckelnahen Bereich angeordnet. Alternativ oder zusätzlich könnte auch der Deckel 2 einen Kraftsensor 9 oder weitere Sensoren (z.B. Temperatursensoren 11) aufweisen.

Der Kraftsensor 9 misst die Kraft, welche aufgrund der Anlage der Trombe 5 an der Innenwandung des Zubereitungsgefäßes 1 - und damit au ch an dem Kraftsensor 9 - angreift. Der Kraftsensor 9 kann bspw. ein Piezosensor mit entsprechender Auswerteelektronik, ein Dehnungsmessstreifen oder ähnliches sein. Die Auswerteelektronik kann dabei der Küchenmaschine 3 zugeordnet sein und elektrische Kontakte und Leitungen zur Spannungsversorgung des Kraftsensors 9 aufwiesen. Aufgrund des Betrages der gemessenen Kraft und ggf. der Dauer der Kraftbeaufschlagung sowie der durch den Temperatursensor 11 gemessenen Temperatur und der durch die Wägeeinrichtung 8 gemessenen Masse der Speise kann auf die Abklingzeit t der Trombe 5 nach dem Abschalten des Rührwerkes 4 und der Heizeinrichtung 6 geschlossen werden. Hierzu werden die Messwerte mit entsprechenden in einer Tabelle hinterlegten Referenzdaten verglichen.

**Bezugszeichenliste:**

| | | | |
|---|---|---|---|
| 1 | Zubereitungsgefäß | t | Abklingzeit |
| 2 | Deckel | v | Strömungsgeschwindigkeit |
| 3 | Küchenmaschine | | |
| 4 | Rührwerk | | |
| 5 | Trombe | | |
| 6 | Heizeinrichtung | | |
| 7 | Verriegelungseinrichtung | | |
| 8 | Wägeeinrichtung | | |
| 9 | Kraftsensor | | |
| 10 | Netzanschlusskabel | | |
| 11 | Temperatursensor | | |

## Patentansprüche

1. Verfahren zur Freigabe einer Verriegelung eines ein Zubereitungsgefäß (1), insbesondere ein mit einem Rührwerk (4) versehenes und/ oder aufheizbares Zubereitungsgefäß (1) einer Küchenmaschine (3), verschließenden Deckels (2), insbesondere nach einem Abschalten des Rührwerkes (4) und/oder einer Heizeinrichtung (6), wobei ein für eine Zubereitung einer Speise verwendeter Zustandswert gemessen und gespeichert wird, wobei der innerhalb eines bestimmten Zeitraumes gemessene Zustandswert mit gespeicherten Referenzdaten verglichen wird und wobei die Freigabe der Verriegelung nach dem Ablauf eines in Abhängigkeit von dem Vergleichsergebnis festgelegten Verzögerungszeitraums erfolgt, **dadurch gekennzeichnet, dass** der Zustandswert innerhalb des Rührgefäßes gemessen wird, dass der gemessene Zustandswert eine Masse und/ oder eine an einer Wandung des Zubereitungsgefäßes oder des Deckels wirkende Kraft und/ oder einen Druck und/oder eine Strömungsgeschwindigkeit der in dem Zubereitungsgefäß (1) enthaltenen Speise angibt.

2. Verfahren nach Anspruch 1, **dadurch gekennzeichnet, dass** der gemessene Zustandswert eine Drehzahl des Rührwerks (4) und/ oder eine Temperatur einer Heizeinrichtung (6) und/oder eine Temperatur der Speisen und/oder ein Volumen der Speise und/oder eine Konsistenz der Speise angibt.

3. Verfahren nach einem der vorhergehenden Ansprüche **dadurch gekennzeichnet, dass** in Bezug auf einen Zubereitungszeitpunkt, zu welchem noch keine oder für einen Vergleich nicht ausreichend viele Zustandswerte gespeichert sind, eine Freigabe des Deckels (2) erst nach Ablauf eines vordefinierten Sicherungszeitraums nach einem Abschalten eines Rührwerkes (4) und/oder einer Heizeinrichtung (6) erfolgt.

4. Verfahren nach Anspruch 3, **dadurch gekennzeichnet, dass** der vordefinierte Sicherungszeitraum mehrere Sekunden, bevorzugt mehr als 5 Sekunden, besonders bevorzugt mehr als 10 Sekunden, beinhaltet.

5. Verfahren, nach einem der vorhergehenden Ansprüche, **dadurch gekennzeichnet, dass** eine sich während der Zubereitung einer Speise innerhalb des Zubereitungsgefäßes (1) ausbildende Trombe (5) aktiv mittels eines in dem Zubereitungsgefäß (1) angeordneten Rührwerks (4) gebremst wird.

6. Verfahren nach Anspruch 5, **dadurch gekennzeichnet, dass** die Trombe (5) mittels einer gegen die Bewegungsrichtung der Trombe (5) gerichteten Bewegung des Rührwerks (4) gebremst wird, insbesondere gegen eine zur Ausbildung der Trombe (5) benutzte Rotationsrichtung des Rührwerks (4).

7. Küchenmaschine (3) mit einem Zubereitungsgefäß (1) und einem dem Zubereitungsgefäß (1) zugeordneten Rührwerk (4) und/oder einer dem Zubereitungsgefäß (1) zugeordneten Heizeinrichtung (6), wobei die Küchenmaschine (3) eine Messeinrichtung zur Messung eines für eine Zubereitung einer Speise innerhalb des Zubereitungsgefäßes (1) gegebenen Zustandswertes aufweist, einen Speicher zur Speicherung des gemessenen Zustandswertes, eine Auswerteeinrichtung zum Vergleichen eines innerhalb eines bestimmten Zeitraumes gemessenen Zustandswertes mit gespeicherten Referenzdaten und eine Verriegelungseinrichtung (7), welche ausgebildet ist, die Freigabe einer Verriegelung eines das Zubereitungsgefäß (1) verschließenden Deckels (2) in Abhängigkeit von dem Vergleichsergebnis der Auswerteeinrichtung zu bewirken, **dadurch gekennzeichnet, dass** die Messeinrichtung eine dem Zubereitungsgefäß (1) zugeordnete Wägeeinrichtung (8) und/ oder einen dem Zubereitungsgefäß (1) zugeordneten Kraftsensor und/ oder Drucksensor und/ oder Strömungssensor (9) aufweist.

8. Küchenmaschine nach Anspruch 7, **dadurch gekennzeichnet, dass** die Messeinrichtung einen dem Rührwerk (4) zugeordneten Drehzahlmesser und/oder einen dem Zubereitungsgefäß (1) und/oder der Heizeinrichtung (6) zugeordneten Temperatursensor und/ oder einen Füllstandssensor aufweist.

## Claims

1. Method for releasing a lock of a lid (2) that closes a preparation vessel (1), in particular a preparation vessel (1) of a kitchen appliance (3), which vessel is provided with a mixer (4) and/or is heatable, in particular after the mixer (4) and/or a heater (6) has been switched off, a state value used for preparing food being measured and stored, the state value measured within a specified time period being compared with stored reference data and the lock being released after a delay period determined on the basis of the comparison result has elapsed, **characterised in that** the state value is measured within the mixing vessel such that the measured state value provides a mass and/or a force acting on a wall of the preparation vessel or the lid and/or a pressure and/or flow speed of the food contained in the preparation vessel (1).

2. Method according to claim 1, **characterised in that** the measured state value provides a rotational speed of the mixer (4) and/or a temperature of a heater (6) and/or a temperature of the food and/or a volume of the food and/or a consistency of the food.

3. Method according to either of the preceding claims, **characterised in that**, in relation to a preparation time at which either no or insufficient state values for a comparison are stored, the lid (2) is only released after a predefined safety period has elapsed after a mixer (4) and/or a heater (6) has been switched off.

4. Method according to claim 3, **characterised in that** the predefined safety period lasts several seconds, preferably more than 5 seconds, particularly preferably more than 10 seconds.

5. Method according to any of the preceding claims, **characterised in that** a vortex (5) that forms during the preparation of food within the preparation vessel (1) is actively curbed by means of a mixer (4) arranged in the preparation vessel (1).

6. Method according to claim 5, **characterised in that** the vortex (5) is curbed by means of a movement of the mixer (4) which is counter to the movement direction of the vortex (5), in particular counter to a rotation direction of the mixer (4) used form the vortex (5).

7. Kitchen appliance (3) comprising a preparation vessel (1) and a mixer (4) associated with the preparation vessel (1) and/or a heater (6) associated with the preparation vessel (1), the kitchen appliance (3) comprising a measuring device for measuring a state value that is given for preparing food within the preparation vessel (1), a storage medium for storing the measured state value, an analysis device for comparing a state value measured within a specified time period with stored reference data, and a locking device (7) that is designed to release a lock of a lid (2) that closes the preparation vessel (1) on the basis of the comparison result from the analysis device, **characterised in that** the measuring device comprises a weighing device (8) associated with the preparation vessel (1) and/or a force sensor and/or pressure sensor and/or flow sensor (9) associated with the preparation vessel (1).

8. Kitchen appliance according to claim 7, **characterised in that** the measuring device comprises a tachometer associated with the mixer (4) and/or a temperature sensor associated with the preparation vessel (1) and/or the heater (6) and/or a fill level sensor.

## Revendications

1. Procédé de déverrouillage d'un dispositif de verrouillage d'un couvercle de fermeture d'une cuve de préparation (1), en particulier une cuve de préparation d'un robot de cuisine pourvue d'un agitateur (4) et/ou pouvant être chauffée, en particulier après un arrêt de l'agitateur (4) et/ou d'un dispositif de chauffage (6), dans lequel est mesuré et enregistré une valeur d'état utilisée pour la préparation de nourriture, dans lequel la valeur d'état mesurée dans un intervalle de temps donné est comparée à des données de référence qui sont stockées et dans lequel le déverrouillage du dispositif de verrouillage intervient après écoulement d'un intervalle de temps de retard déterminé en fonction du résultat de la comparaison, **caractérisé en ce que** la valeur d'état est mesurée à l'intérieur de la cuve de brassage, que la valeur d'état mesurée correspond à une masse et/ou une force agissant sur une paroi de la cuve de préparation ou du couvercle et/ou une pression et/ou une vitesse d'écoulement de la nourriture contenue dans la cuve de préparation (1).

2. Procédé selon la revendication 1, **caractérisé en ce que** la valeur d'état mesurée correspond à une vitesse de rotation de l'agitateur (4) et/ou une température d'un dispositif de chauffage (6) et/ou une température de la nourriture et/ou un volume de la nourriture et/ou une consistance de la nourriture.

3. Procédé selon l'une des revendications précédentes, **caractérisé en ce que**, en référence à un moment de préparation pour lequel il n'y a encore aucune mesure d'état enregistrée ou en nombre insuffisant pour effectuer la comparaison, le déverrouillage du couvercle (2) n'a lieu qu'après écoulement d'un temps de sécurité prédéfini après l'arrêt de l'agitateur (4) et/ou d'un dispositif de chauffage (6).

4. Procédé selon la revendication 3, **caractérisé en ce que** le temps de sécurité prédéfini comporte plusieurs secondes, de préférence plus de 5 secondes, et de manière particulièrement préférée, plus de 10 secondes.

5. Procédé selon l'une des revendications précédentes, **caractérisé en ce qu'**une trombe (5) se formant à l'intérieur de la cuve de préparation lors de la préparation de nourriture, est activement freinée au moyen d'un agitateur (4) agencé dans la cuve de préparation (1).

6. Procédé selon la revendication 5, **caractérisé en ce que** la trombe (5) est freinée au moyen d'un déplacement de l'agitateur (4) dirigée à l'encontre de la direction de déplacement de la trombe (5), en particulier à l'encontre d'une direction de rotation de l'agitateur (4) utilisée pour former la trombe (5).

7. Robot de cuisine (3), comprenant une cuve de préparation (1) et un agitateur (4) associé à la cuve de préparation (1) et/ou un dispositif de chauffage (6) associé à la cuve de préparation (1), dans lequel le robot de cuisine (3) comprend un dispositif de mesure pour mesurer une valeur d'état donnée pour la préparation de nourriture dans la cuve de préparation (1), une mémoire pour stocker la valeur d'état mesurée, un dispositif de comparaison pour comparer une valeur d'état mesurée dans un intervalle de temps donné avec des données de référence qui sont stockées et un dispositif de verrouillage (7) qui est conçu pour déverrouiller un couvercle (2) fermant la cuve de préparation (1) en fonction du résultat de la comparaison du dispositif de comparaison, **caractérisé en ce que** le dispositif de mesure comprend un dispositif de pesée (8) associé à la cuve de préparation (1) et/ou un capteur d'effort et/ou capteur de pression et/ou capteur d'écoulement associé(s) à la cuve de préparation (1).

8. Robot de cuisine selon la revendication 7, **caractérisé en ce que** le dispositif de mesure comprend un dispositif de mesure de vitesse de rotation associé à l'agitateur (4) et/ou un capteur de température associé à la cuve de préparation (1) et/ou au dispositif de chauffage (6) et/ou un capteur de niveau de remplissage.
